# EUROPEAN PATENT APPLICATION

(11) **EP 4 647 747 A1**
(43) Date of publication of application: **12.11.2025**
(21) Application number: 25174895.0
(22) Date of filing: 07.05.2025
(51) Int. Cl.: G01N 21/954, G01N 21/84, G01N 21/88, G01N 21/95, G01N 21/65

(54) **BLADE TIP WEAR DETECTION SYSTEM AND METHODS FOR AEROSPACE COMPONENTS**

(30) Priority: 07.05.2024 US 202463643635 P
(71) Applicant: RTX Corporation, Farmington, CT 06032 (US)
(72) Inventor: WOERNER, William, Farmington, 06032 (US); CERNATESCU, Iuliana, Farmington, 06032 (US); LUCAS, Marcel, Farmington, 06032 (US); KERNOZICKY, Garrett, Farmington, 06032 (US); CONETY, Kathryn S., Farmington, 06032 (US); RAYNOR, Samuel W., Farmington, 06032 (US)
(74) Representative: Dehns

(57) **Abstract**

An inspection assembly (500) includes a detection system (504) and a controller (512). The detection system (504) is configured to implement a crystallographic and optical spectroscopy technique to identify a target material of a coating (74) of a component. The detection system (504) includes a source (518) and a detector (520). The source (518) is configured to generate and direct a beam to the component. The detector (520) is configured to receive a light (532) emission of the coating (74) resulting from interaction with the beam. The controller (512) is configured to scan the component by controlling the source (518) to direct the beam to the component and capturing material composition data for the target material from the light emission received by the detector (520) and identify a coverage of the coating (74) on the component is satisfactory or unsatisfactory based on an intensity of the material composition data.

## Description

### BACKGROUND

### 1. Technical Field

This disclosure relates generally to gas turbine engine components and, more particularly, to inspection systems and methods for gas turbine engine components.

### 2. Background Information

Gas turbine engines, such as those found in aircraft propulsion systems, may include bladed rotors and other components having a coating applied thereto. For example, rotor blade tips may include an abrasive material coating. This coating may become worn during operation of the associated gas turbine engine. At various maintenance intervals, gas turbine engine components may be inspected to identify satisfactory coating coverage on these gas turbine engine components. Various systems and methods for inspecting components are known in the art. While these known systems and methods may be suitable for their intended purposes, there is always room in the art for improvement.

### SUMMARY

According to an aspect of the present disclosure, an inspection assembly includes a detection system and a controller. The detection system is configured to implement a crystallographic and optical spectroscopy technique to identify a target material of a coating of a component. The detection system includes a source and a detector. The source is configured to generate and direct a beam to the component. The detector is configured to receive a light emission of the coating resulting from interaction with the beam. The controller includes a processor connected in signal communication with memory containing instructions which, when executed by the processor, cause the processor to scan the component by controlling the source to direct the beam to the component and capturing material composition data for the target material from the light emission received by the detector and identify a coverage of the coating on the component is satisfactory or unsatisfactory based on an intensity of the material composition data. The satisfactory coverage of the coating is identified by the intensity being greater than an intensity threshold. The unsatisfactory coverage of the coating is identified by the intensity being less than the intensity threshold.

In any of the aspects or embodiments described above and herein, the source may include an x-ray source.

In any of the aspects or embodiments described above and herein, the source may include a Raman incident light source.

In any of the aspects or embodiments described above and herein, the instructions, when executed by the processor, may further cause the processor to receive an area of interest location on the coating, and scanning the component may include directing the beam to the area of interest location and capturing the material composition data for the target material at the area of interest location.

In any of the aspects or embodiments described above and herein, the instructions, when executed by the processor, may further cause the processor to identify the coverage of the coating on the component is satisfactory or unsatisfactory by comparing the intensity at a plurality of different points on the coating to the intensity threshold.

In any of the aspects or embodiments described above and herein, the instructions, when executed by the processor, may further cause the processor to identify the coverage of the coating on the component is satisfactory or unsatisfactory by identifying the coating is sufficient or insufficient for each of a plurality of geometric bins on the component.

In any of the aspects or embodiments described above and herein, the instructions, when executed by the processor, may further cause the processor to identify the coating is sufficient or insufficient for each of the plurality of geometric bins by comparing the intensity for each of the plurality of geometric bins to a bin intensity threshold.

In any of the aspects or embodiments described above and herein, the instructions, when executed by the processor, may further cause the processor to identify the coverage of the coating on the component is satisfactory where a quantity of the plurality of geometric bins identified has having the sufficient coating is greater than a threshold quantity of the geometric bins.

In any of the aspects or embodiments described above and herein, the component may be a first rotor blade of a plurality of rotor blades of a rotor disk, the first rotor blade may have a first blade tip, and the coating may be disposed on the first blade tip.

In any of the aspects or embodiments described above and herein, a second rotor blade of the plurality of rotor blades, circumferentially adjacent the first rotor blade, may include a second blade tip, and the coating may be disposed on the second blade tip. The instructions, when executed by the processor, may further cause the processor to scan the second blade tip by controlling the source to direct the beam to the second blade tip and capturing material composition data for the target material from the light emission received by the detector and identify the coverage of the coating on the component is unsatisfactory based on the intensity of the material composition data for the first rotor blade and the second rotor blade each being less than a second intensity threshold, different than the intensity threshold.

In any of the aspects or embodiments described above and herein, the coating may include a grit material dispersed in a metallic matrix, and the grit material may be the target material.

According to another aspect of the present disclosure, a method for inspecting a coating of a component includes scanning the component, using a crystallographic and optical spectroscopy technique to identify a target material of the coating, by controlling a source of a detection system to direct a beam to the component and capturing material composition data for the target material from the light emission received by a detector of the detection system and identifying a coverage of the coating on the component is satisfactory or unsatisfactory based on an intensity calculated based on the material composition data. The satisfactory coverage of the coating is identified by the intensity greater than an intensity threshold. The unsatisfactory coverage of the coating is identified by the intensity less than the intensity threshold.

In any of the aspects or embodiments described above and herein, the source may include an x-ray source.

In any of the aspects or embodiments described above and herein, the source may include a Raman incident light source.

In any of the aspects or embodiments described above and herein, identifying the coverage of the coating on the component is satisfactory or unsatisfactory may include identifying the coating is sufficient or insufficient for each of a plurality of geometric bins on the component.

In any of the aspects or embodiments described above and herein, the method may further include performing a visual inspection of the component to identify one or more areas of interest for the coating, and scanning the component may include scanning the identified one or more areas of interest.

In any of the aspects or embodiments described above and herein, the method may further include repairing the coating on the component in response to identifying the unsatisfactory coverage of the coating.

According to another aspect of the present disclosure, an assembly includes a component, a detection system, and a controller. The component includes a component surface and a coating disposed on the component surface. The coating includes a metallic matrix and a grit material dispersed in the metallic matrix. The detection system is configured to implement a crystallographic and optical spectroscopy technique to identify a target material of the coating. The detection system includes a source and a detector. The source is configured to generate and direct a beam to the coating. The detector is configured to receive a light emission of the coating resulting from interaction with the beam. The controller includes a processor connected in signal communication with memory containing instructions which, when executed by the processor, cause the processor to scan the coating by controlling the source to direct the beam to the coating and capturing material composition data for the target material from the light emission received by the detector and identify a coverage of the coating on the component is satisfactory or unsatisfactory based on an intensity of the material composition data by comparing the intensity to an intensity threshold for the target material.

In any of the aspects or embodiments described above and herein, the target material may be the grit material, the coverage of the coating on the component may be satisfactory where the intensity is greater than the intensity threshold, and the coverage of the coating on the component may be unsatisfactory where the intensity is less than the intensity threshold.

In any of the aspects or embodiments described above and herein, the target material may be the metallic matrix, the coverage of the coating on the component may be satisfactory where the intensity is less than the intensity threshold, and the coverage of the coating on the component may be unsatisfactory where the intensity is greater than the intensity threshold.

The foregoing features and elements may be combined in various combinations without exclusivity, unless expressly indicated otherwise. For example, aspects and/or embodiments of the present disclosure may include any one or more of the individual features or elements disclosed above and/or below alone or in any combination thereof. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

FIG. 1 schematically illustrates a cutaway, side view of a gas turbine engine for an aircraft propulsion system, in accordance with one or more embodiments of the present disclosure.
FIG. 2 illustrates a perspective view of a bladed disk for a gas turbine engine rotor, in accordance with one or more embodiments of the present disclosure.
FIG. 3 schematically illustrates a tip end of a rotor blade including a coating, in accordance with one or more embodiments of the present disclosure.
FIG. 4 illustrates a block diagram depicting a method for inspecting a component, in accordance with one or more embodiments of the present disclosure.
FIG. 5 schematically illustrates an inspection assembly, in accordance with one or more embodiments of the present disclosure.
FIG. 6A schematically illustrates an x-ray detection system for an inspection assembly, in accordance with one or more embodiments of the present disclosure.
FIG. 6B schematically illustrates a Raman detection system for an inspection assembly, in accordance with one or more embodiments of the present disclosure.
FIG. 7 illustrates a graph depicting a signal intensity for an inspected portion of a component, in accordance with one or more embodiments of the present disclosure.
FIG. 8 illustrates a tip end of a rotor blade, in accordance with one or more embodiments of the present disclosure.
FIG. 9 schematically illustrates an exemplary inspection assembly, in accordance with one or more embodiments of the present disclosure.
FIG. 10 schematically illustrates another exemplary inspection assembly, in accordance with one or more embodiments of the present disclosure.

### DETAILED DESCRIPTION

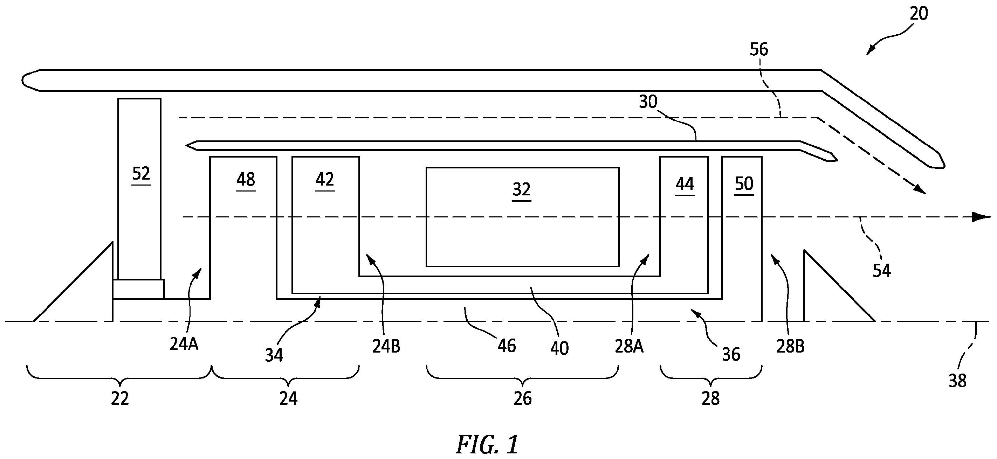

FIG. 1 schematically illustrates a gas turbine engine 20. The gas turbine engine 20 of FIG. 1 is a multi-spool turbofan gas turbine engine for an aircraft propulsion system. However, while the following description and accompanying drawings may refer to the turbofan gas turbine engine of FIG. 1 as an example, it should be understood that aspects of the present disclosure may be equally applicable to other types of gas turbine engines including, but not limited to, a turboshaft gas turbine engine, a turboprop gas turbine engine, a turbojet gas turbine engine, a propfan gas turbine engine, or an open rotor gas turbine engine.

The gas turbine engine 20 of FIG. 1 includes a fan section 22, a compressor section 24, a combustor section 26, a turbine section 28, and an engine static structure 30. The compressor section 24 of FIG. 1 includes a low-pressure compressor (LPC) 24A and a high-pressure compressor (HPC) 24B. The combustor section 26 includes a combustor 32 (e.g., an annular combustor). The turbine section 28 includes a high-pressure turbine (HPT) 28A and a low-pressure turbine (LPT) 28B.

Components of the fan section 22, the compressor section 24, and the turbine section 28 form a first rotational assembly 34 (e.g., a high-pressure spool) and a second rotational assembly 36 (e.g., a low-pressure spool) of the gas turbine engine 20. The first rotational assembly 34 and the second rotational assembly 36 are mounted for rotation about a rotational axis 38 (e.g., an axial centerline) of the gas turbine engine 20 relative to the engine static structure 30.

The first rotational assembly 34 includes a first shaft 40, a bladed first compressor rotor 42 for the high-pressure compressor 24B, and a bladed first turbine rotor 44 for the high-pressure turbine 28A. The first shaft 40 interconnects the bladed first compressor rotor 42 and the bladed first turbine rotor 44.

The second rotational assembly 36 includes a second shaft 46, a bladed second compressor rotor 48 for the low-pressure compressor 24A, and a bladed second turbine rotor 50 for the low-pressure turbine 28B. The second shaft 46 interconnects the bladed second compressor rotor 48 and the bladed second turbine rotor 50. The second shaft 46 may additionally be directly or indirectly coupled to a bladed fan rotor 52 for the fan section 22. For example, the second shaft 46 may be coupled to the bladed fan rotor 52 (e.g., an input shaft of the bladed fan rotor 52) by a reduction gear assembly configured to drive the bladed fan rotor 52 at a reduced rotational speed relative to the second shaft 46. The first shaft 40 and the second shaft 46 are concentric and configured to rotate about the rotational axis 38. The present disclosure, however, is not limited to concentric configurations of the first shaft 40 and the second shaft 46.

The engine static structure 30 may include one or more engine cases, cowlings, bearing assemblies, and/or other non-rotating structures configured to house and/or support (e.g., rotationally support) components of the gas turbine engine 20 sections 22, 24, 26, 28. The engine static structure 30 may form an exterior (e.g., an outer radial portion) of the gas turbine engine 20.

In operation of the gas turbine engine 20 of FIG. 1, ambient air is directed through the fan section 22 and into a core flow path 54 (e.g., an annular flow path) and a bypass flow path 56 (e.g., an annular flow path) by rotation of the bladed fan rotor 52. Airflow along the core flow path 54 is compressed by the low-pressure compressor 24A and the high-pressure compressor 24B, mixed and burned with fuel in the combustor 32, and then directed through the high-pressure turbine 28A and the low-pressure turbine 28B. The bladed first turbine rotor 44 and the bladed second turbine rotor 50 rotationally drive the first rotational assembly 34 and the second rotational assembly 36, respectively, in response to the combustion gas flow through the high-pressure turbine 28A and the low-pressure turbine 28B. The bypass flow path 56 may be disposed outside the engine static structure 30. For example, the engine static structure 30 and an outer aircraft propulsion system housing (e.g., a nacelle) may form an annular bypass duct radially therebetween, and airflow may be directed through the annular bypass duct along the bypass flow path 56.

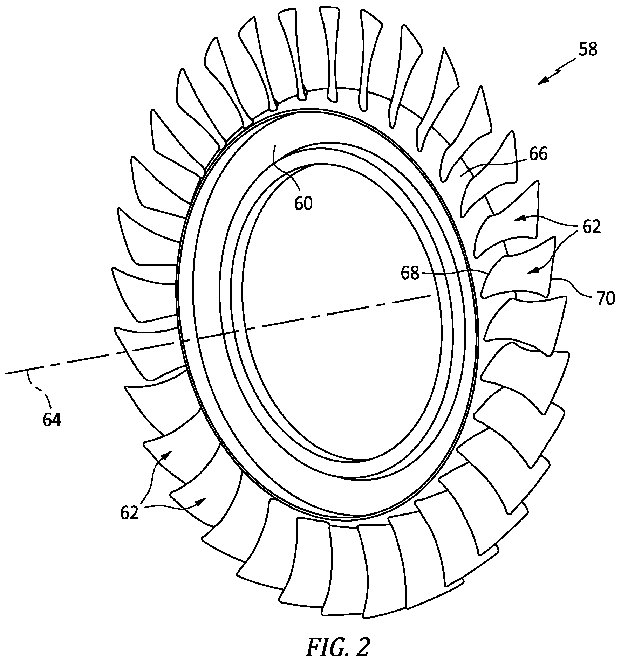

FIG. 2 illustrates a perspective view of a bladed disk 58. The bladed disk 58 may form a portion of a bladed rotor such as, but not limited to, the bladed first compressor rotor 42, the bladed first turbine rotor 44, the bladed second compressor rotor 48, and/or the bladed second turbine rotor 50. The bladed disk 58 of FIG. 2 includes a disk 60 and a plurality of blades 62 (e.g., airfoils). The disk 60 extends circumferentially about (e.g., completely around) an axis 64 (e.g., an axial centerline) of the bladed disk 58. The disk 60 forms all or a portion of a platform 66 of the bladed disk 58 on an outer radial side of the disk 60. The platform 66 extends circumferentially about (e.g., completely around) the axis 64. The blades 62 are arranged circumferentially on the disk 60 along the platform 66. The blades 62 may be mounted to the disk 60 at (e.g., on, adjacent, or proximate) the platform 66. For example, each of the blades 62 may be installed in a slot (e.g., a dovetail slot) formed by the disk 60. Alternatively, the bladed disk 58 (e.g., the disk 60 and the blades 62) may form an integrally bladed rotor ("IBR"; sometimes referred to as a "blisk"). Each of the blades 62 extends (e.g., radially extends) between and to a base end 68 of the respective blade 62 and a tip end 70 of the respective blade 62. The base end 68 is disposed at (e.g., on, adjacent, or proximate) the disk 60. Each of the blades 62 may further form a portion of the platform 66 at (e.g., on, adjacent, or proximate) the base end 68. The tip end 70 is disposed radially outward of the base end 68.

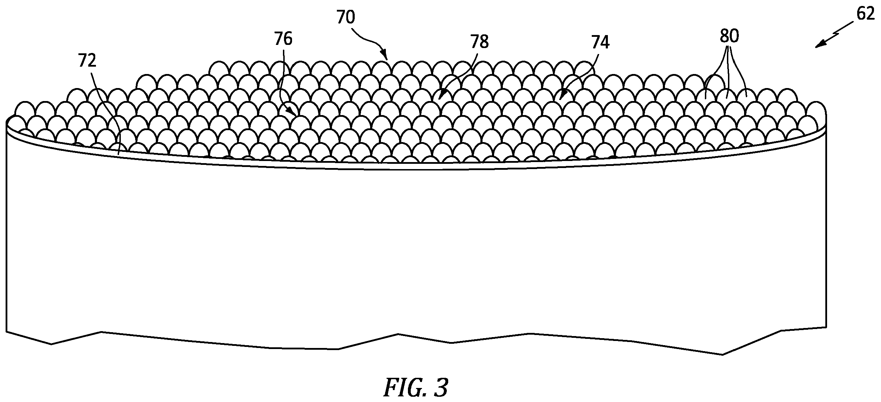

FIG. 3 illustrates a portion of one of the blades 62 including the tip end 70. Each of the blades 62 forms a tip surface 72 on the tip end 70. One, more than one, or each of the blades 62 of the bladed disk 58 may include a coating 74 disposed on the tip surface 72. The coating 74 includes a grit material 76 (e.g., a hard particulate material) dispersed in a metallic matrix 78. Examples of the grit material 76 include particulate material such as, but not limited to, cubic boron nitride (CBN) particulate, carbide particulate (e.g., silicon carbide (SiC), tungsten carbide (WC), etc.), oxide particulate (e.g., aluminum oxide (Al₂O₃), zirconium oxide (ZrO₂), etc.), silicon nitride (Si₃N₄) particulate, titanium diboride (TiB₂) particulate, and the like, and combinations thereof. The metallic matrix 78, for example, may be formed wholly or in substantial part by nickel or a nickel-based alloy. The present disclosure, however, is not limited to any particular material for the grit material 76 or the metallic matrix 78. The coating 74 (e.g., the grit material 76) forms a plurality of protrusions 80 projecting from (e.g., radially outward from) the tip surface 72.

During operation of the gas turbine engine 20, the tip end 70 of each of the blades 62 may move in close radial proximity to an engine casing, a blade outer air seal (BOAS), or other engine static structure 30 component forming a portion of the core flow path 54 and circumscribing the bladed disk 58, as the bladed disk 58 rotates (e.g., about the rotational axis 38). For example, the tip end 70 may be disposed radially inward of an abradable liner or other abradable material of a BOAS, forming a small radial gap between the tip end 70 and the abradable material. The coating 74 on the tip surface 72 may facilitate improved fluid sealing between the tip end 70 and the abradable material, thereby improving efficiency of the gas turbine engine 20. However, during operation of the gas turbine engine 20, the tip end 70 of one or more of the blades 62 may contact the abradable material causing portions of the coating 74 on the tip surface 72 to wear or be removed from the tip surface 72, thereby reducing improvements to gas turbine engine 20 efficiency facilitated by the coating 74.

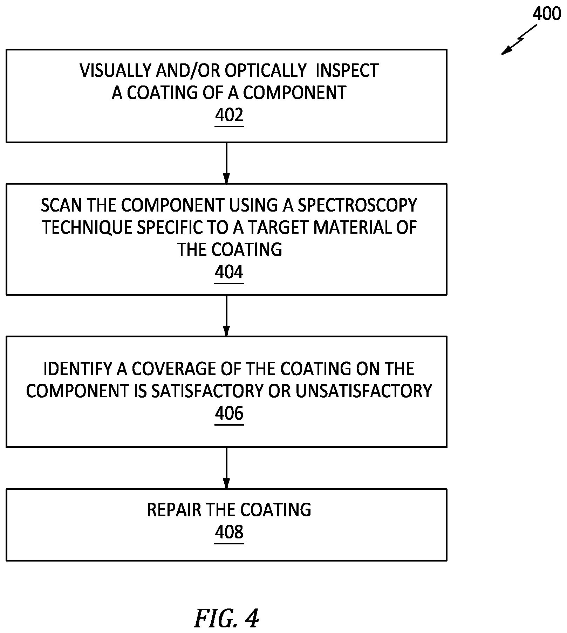

Referring to FIG. 4, a method 400 for inspecting rotor blade tips for a bladed rotor is provided. For example, the method 400 may include inspecting the coating 74 on one, more than one, or each of the blades 62 (e.g., the tip end 70) to identify the coverage of the coating 74 on the tip surface 72 is satisfactory or unsatisfactory. For ease of explanation, the method 400 is described herein for the bladed disk 58. The present disclosure method 400, however, is not limited to the foregoing exemplary configuration of the bladed disk 58. Unless otherwise noted herein, it should be understood that the steps of method 400 are not required to be performed in the specific sequence in which they are discussed below and, in some embodiments, the steps of the method 400 may be performed separately or simultaneously.

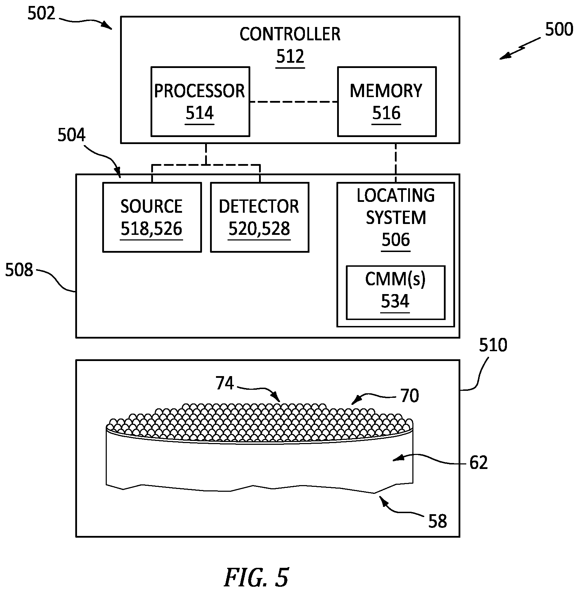

FIG. 5 schematically illustrates an inspection assembly 500. The inspection assembly 500 may be used to control and/or perform one or more of the steps of the method 400. For ease of explanation, steps of the method 400 will be described herein with respect to the inspection assembly 500, however, the method 400 is not limited to use with the inspection assembly 500. The inspection assembly 500 of FIG. 5 includes a computer-based system 502, at least one detection system 504, and a locating system 506. The inspection assembly 500 may additionally include a positioning system 508 for one or both of the detection system 504 and the locating system 506. The inspection assembly 500 may additionally include a positioning system 510 for the bladed disk 58.

The computer-based system 502 includes a controller 512. The controller 512 includes a processor 514 connected in communication (e.g., signal communication with memory 516. The processor 514 may include any type of computing device, computational circuit, or any type of process or processing circuit capable of executing a series of instructions that are stored in the memory 516, thereby causing the processor 514 to perform or control one or more steps or other processes. The processor 514 may include multiple processors and/or multicore CPUs and may include any type of processor, such as a microprocessor, digital signal processor, coprocessors, a micro-controller, a microcomputer, a central processing unit, a field programmable gate array, a programmable logic device, a state machine, logic circuitry, analog circuitry, digital circuitry, etc., and any combination thereof. Instructions can be directly executable or can be used to develop executable instructions. For example, instructions can be realized as executable or non-executable machine code or as instructions in a high-level language that can be compiled to produce executable or non-executable machine code. Further, instructions also can be realized as or can include data. Computer-executable instructions also can be organized in any format, including routines, subroutines, programs, data structures, objects, modules, applications, applets, functions, etc. The instructions may include an operating system, and/or executable software modules such as program files, system data, buffers, drivers, utilities, and the like. The executable instructions may apply to any functionality described herein to enable the inspection assembly 500 to accomplish the same algorithmically and/or by coordination of inspection assembly 500 components. For example, the memory 516 may include instructions which, when executed by the processor 514, cause the processor 514 to perform or control one or more steps or functions of the method 400. The instructions may be in the form of a CNC programming language (e.g., G-code, M-code, etc.), or another suitable programming language which can be executed by the processor 514 to control locating of the bladed disk 58 (e.g., the tip surface 72 of each of the blades 62) with the locating system 506 and/or positioning the detection system 504 and/or the bladed disk 58 with the positioning system 508 and/or the positioning system 510, respectively. The memory 516 may include a single memory device or a plurality of memory devices (e.g., a computer-readable storage device that can be read, written, or otherwise accessed by a general purpose or special purpose computing device, including any processing electronics and/or processing circuitry capable of executing instructions). The present disclosure is not limited to any particular type of memory device, which may be non-transitory, and may include read-only memory, random access memory, volatile memory, non-volatile memory, static memory, dynamic memory, flash memory, cache memory, volatile or non-volatile semiconductor memory, optical disk storage, magnetic disk storage, magnetic tape, other magnetic storage devices, or any other medium capable of storing one or more instructions, and/or any device that stores digital information. The memory device(s) may be directly or indirectly coupled to the controller 512. The computer-based system 502 may include, or may be in communication with, an input device that enables a user to enter data and/or instructions, and may include, or be in communication with, an output device configured, for example to display information (e.g., a visual display or a printer), or to transfer data, etc. Communications between the controller 512 and components of the inspection assembly 500 (e.g., the detection system 504, the locating system 506, the positioning system 508, and/or the positioning system 510) may be via a hardwire connection or via a wireless connection. A person of skill in the art will recognize that portions of the controller 512 may assume various forms (e.g., digital signal processor, analog device, etc.) capable of performing the functions described herein.

The detection system 504 is configured to implement one or more crystallographic and optical spectroscopy techniques (hereinafter "spectroscopy technique(s)") to facilitate inspection of the coating 74 at the tip end 70 for each of the blades 62 of the bladed disk 58. Examples of the spectroscopy techniques include x-ray crystallography (e.g., x-ray diffraction (XRD) inspection), Raman spectroscopy, laser-induced breakdown spectroscopy, photoluminescence spectroscopy, and reflectance spectroscopy. This crystallographic and optical spectroscopy detection system 504 is operable (e.g., in combination with the controller 512) to identify an atomic and/or molecular structure of one or more target materials, in particular, the grit material 76, the metallic matrix 78, and/or a material of the blades 62.

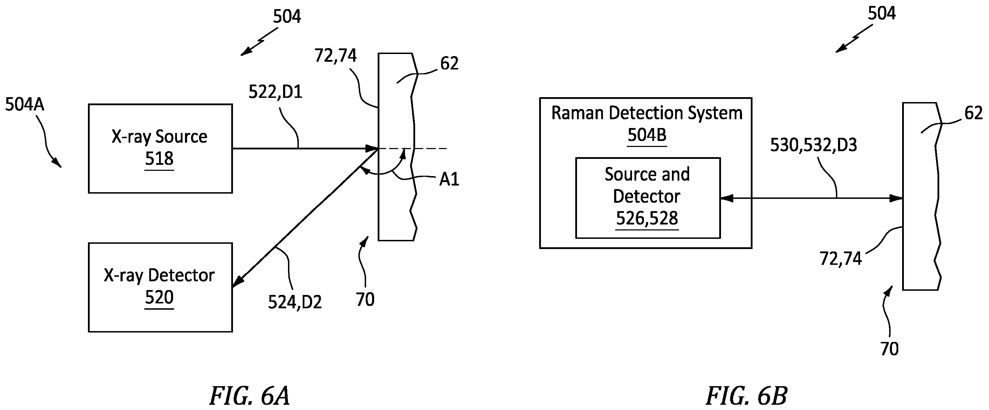

FIGS. 6A-B illustrate different configurations of the detection system 504. The detection system 504 of FIG. 6A forms or otherwise includes an x-ray crystallography detection system 504A (hereinafter "x-ray detection system"). In another embodiment, the controller 512 may identify sufficient coverage of the coating 74 at a given location or area of the tip surface 72 where the determined intensity from the coating matrix at that given location or area is lower than an intensity threshold 536. The controller 512 may identify insufficient coverage of the coating 74 at the given location or area of the tip surface 72 where the determined intensity from the coating matrix at that given location or area is greater than the intensity threshold 536. For example, laser-induced breakdown spectroscopy can detect the intensity from the nickel in the matrix. The presence of grit material would decrease the signal from the nickel-based matrix. The x-ray detection system 504A includes an x-ray source 518 and at least one x-ray detector 520. The x-ray source 518 is configured to emit, direct, and shape an x-ray beam 522 onto one or more target materials. For example, as shown in FIG. 6A, the x-ray source 518 may direct the x-ray beam 522 onto the tip end 70 and the coating 74. The x-ray source 518 may direct a single x-ray wavelength or a plurality of discrete x-ray wavelengths, which wavelengths may be selected for a particular target material to be identified. Examples of the x-ray source 518 include, but are not limited to, a 1.54 Angstrom (Å) Cu source, a 1.39Å Cu source, a 2.29Å Cr source, a 2.08Å Cr source, or the like. The present disclosure, however, is not limited to any particular x-ray source configuration or emitted x-ray wavelength for the x-ray source 518. The x-ray detector 520 may be a one-dimensional (1D) x-ray detector or a two-dimensional (2D) x-ray detector. The x-ray detector 520 is positioned relative to the x-ray source 518 to receive an x-ray diffraction 524 of the x-ray beam 522 by the one or more target materials (e.g., the coating 74). For example, the x-ray detector 520 may be positioned relative to the x-ray source 518 to receive the x-ray diffraction 524 at an angle A1 (e.g., a Bragg angle) relative to the direction of the x-ray beam 522. The selected angle A1 may be specified to the target material (e.g., corresponding to a diffraction angle for the target material).

The detection system 504 of FIG. 6B forms or otherwise includes a Raman spectroscopy detection system 504B (hereinafter "Raman detection system"). The Raman detection system 504B includes a Raman incident light source 526 and a Raman detector 528 (e.g., a combination of a Raman spectrometer and a camera). The Raman incident light source 526 is typically a laser, although alternative light sources, such as lamps, may be used. The Raman source 526 may be configured to emit and direct an incident light beam 530 (e.g., monochromatic light), for example, in the visible, infrared, or ultraviolet ranges. For example, as shown in FIG. 6B, the Raman source 526 may direct and focus the incident light beam 530 onto the tip end 70 and the coating 74 at or near normal incidence with an objective. The incident light beam 530 may have different profiles, such as a spot or a line. The Raman detector 528 is configured to receive the light 532 produced by the inelastic scattering of the incident light beam 530 by the target material (e.g., the coating 74), or Raman effect. The Raman detector 528 may be a two-dimensional (2D) Raman detector or a three-dimensional (3D) Raman detector. The Raman source 526 and the Raman detector 528 may be configured together (e.g., as a single unit), as shown in FIG. 6B, and may direct the laser beam 530 and receive the Raman scattered light 532 along the same or substantially same path using the same objective. The present disclosure, however, is not limited to the foregoing exemplary configuration of the Raman detection system 504B of FIG. 6B, and the Raman detector 528 may alternatively be positioned relative to the Raman source 526 to receive the Raman scattered light 532 at an angle relative to the laser beam 530. The Raman source 526 and the Raman detector 528 may be located close to the target material. Alternatively, the Raman source 526 and the Raman detector 528 may be located far from the target material, in which case the incident and scattered light may be directed to and from the target material respectively, using optical fibers or mirrors. Embodiments of the Raman detection system 504B may include one Raman source 526 and a plurality of Raman detectors 528, a plurality of Raman sources 526 and one Raman detector 528, or a plurality of Raman sources 526 with a plurality of Raman detectors 528. The Raman detection system 504B may be configured to examine a single blade 62 or a plurality of blades 62 simultaneously. In some embodiments, the Raman detection system 504B may be used simultaneously or sequentially with the x-ray detection system 504A on the same blade 62, or used simultaneously or sequentially on different blades 62.

In other embodiments, the detection system 504 of FIG. 6B forms or otherwise includes another type of optical spectroscopy, such as laser-induced breakdown spectroscopy, photoluminescence spectroscopy, or reflectance spectroscopy system. The laser-induced breakdown spectroscopy system may operate with an inert gas (e.g., nitrogen or argon) flow or atmosphere, or under reduced pressure.

The locating system 506 is configured to locate the bladed disk 58, and particularly the tip end 70, relative to a machine coordinate system (MCS) of the inspection assembly 500 arranged, for example, in an X-direction, a Y-direction, and a Z-direction. The locating system 506 may include one or more coordinate measuring machines (CMMs) 534 for sensing discrete points of the bladed disk 58 (e.g., the tip end 70) and using the sensed discrete points to locate the bladed disk 58 in the MCS. The location system 506 may include one or more CMMs 534 such as, but not limited to, lasers, contact scanning probes, non-contact probes, touch probes, machine vision systems, optical scanners, optical comparators, and the like, and the present disclosure is not limited to any particular CMM(s) 534 for the locating system 506. One or more of the CMMs 534 may be positionally fixed within the MCS. Alternatively, one or more of the CMMs 534 may be movable within the MCS to contact (e.g., with a touch probe) the bladed disk 58 (e.g., the tip end 70) or to vary a position of the CMMs 534 relative to the bladed disk 58 (e.g., lasers, optical locating systems, etc.). For example, components of the locating system 506 of FIG. 5 are movable by operation of the positioning system 508. Components of the locating system 506 may be movable with the detection system 504 by the positioning system 508. Alternatively, the locating system 506 may include a discrete positioning system independent of the positioning system 508. In some embodiments, the x-ray detection system 504A and Raman detection system 504B may be controlled to examine the same blade 62 simultaneously, in which case a single locating system 506 may be used for both detection systems 504A, 504B. In some other embodiments, the inspection assembly 500 may include a plurality of locating systems 506, one for each detection system 504 (visual inspection, x-ray detection, and/or Raman detection). In this case, a location of an area of interest found using a first detection system 504 may be transferable to a discrete second detection system 504, so that the same area of interest can be automatically located by the locating system 506 for the second detection system 504 for additional analyses.

The inspection assembly 500 may include the positioning system 508 and/or the positioning system 510 for positioning of the detection system 504 (e.g., and the locating system 506) and the bladed disk 58, respectively. The positioning system 508 may be a robotic arm or other manipulator configured to move the detection system 504 relative to the MCS (e.g., controlled by the controller 512). For example, the positioning system 508 may be operable to translate and/or rotate the detection system 504 in and about the X-direction, the Y-direction, and the Z-direction. The positioning system 510 may be a rotatable platform or other manipulator configured to move the bladed disk 58 (e.g., the tip end 70) relative to the MCS (e.g., controlled by the controller 512). For example, the positioning system 510 may be operable to translate and/or rotate the bladed disk 58 in and about the X-direction, the Y-direction, and the Z-direction. For example, the positioning system 510 may be configured to effect rotation of the bladed disk 58 about the axis 64 to sequentially position the tip end 70 of each of the blades 62 relative to the detection system 504, as will be discussed in further detail below.

Step 402 includes (e.g., optionally) visually inspecting the tip end 70. For example, an inspector may visually inspect the tip end 70 to identify unsatisfactory coverage of the coating 74 on the tip surface 72 or to otherwise identify one or more areas of interest on the tip end 70 (e.g., areas on the tip end 70 that appear to have a low density of protrusions 80 or worn, covered with debris, or missing coating 74 on a particular area of the tip surface 72).

Step 404 includes scanning the tip end 70 with the detection system 504. Step 404 may include scanning at least any areas of interest on the tip end 70 identified, for example, in step 402. Alternatively, step 404 may include scanning an entire area of the tip end 70 (e.g., the tip surface 72) where the coating 74 is present or expected to be present under based on design specifications of the blades 62. The controller 512 may control the detection system 504 to scan the tip end 70 by applying a spectroscopy technique, as previously discussed, to capture material composition data for the tip end 70 and the coating 74. The material composition data, the computer-based system 502 and/or its controller 512 may generate a two-dimensional (2D) or three-dimensional (3D) material composition image of the tip end 70 and the coating 74.

In a first example, and with reference to FIG. 6A, the x-ray detection system 504A may direct the x-ray beam 522 to the tip end 70 and the coating 74 and capture the material composition data for the tip end 70 and the coating 74 in the form of an intensity of the x-ray diffraction 524. The x-ray source 518 and the x-ray detector 520 may first be positioned (e.g., by the positioning system 508 controlled by the controller 512) relative to one another and relative to the tip end 70 to capture an angular portion of the x-ray diffraction 524 corresponding to the target material(s), in particular, the grit material 76 and/or the metallic matrix 78. For example, the controller 512 may control the positioning system 508 to position the x-ray source 518 at a source distance D1 from the tip end 70, the x-ray detector 520 at a detector distance D2 from the tip end 70, and the x-ray source 518 relative to the x-ray detector 520 at the angle A1. The source distance D2, the detector distance D2, and the angle A1 may be selected for the target material(s) and the x-ray detection system 504A configuration (e.g., and stored in memory 516) to facilitate collection of the material composition data at an acceptable resolution for the target materials(s).

In a second example, and with reference to FIG. 6B, the Raman detection system 504B may direct the laser beam 530 to the tip end 70 and the coating 74 and capture the material composition data for the tip end 70 and the coating 74 in the form of an intensity or a peak position in wave number of the Raman scattered light 532. The Raman source 526 and the Raman detector 528 may first be coarsely positioned (e.g., by the positioning system 508 controlled by the controller 512) at a distance D3 from the tip end 70. The fine adjustment of the distance D3 may involve the acquisition of a series of bright-field optical micrographs at different distances around the coarse position determined by the positioning system 508 and the determination of the micrograph with the highest contrast for each point in the field of view. The optical microscope may be integrated with the Raman detection system and use the same objective. During the acquisition of the Raman scattered light 532 as the laser beam scans the length of the tip end 70, the position of the Raman detection system 504B may be continuously adjusted to maintain the distance D3 constant. The distance D3 may be selected for the target material(s) (e.g., the grit material 76 and/or the metallic matrix 78) and the Raman detection system 504B configuration (e.g., and stored in memory 516) to facilitate collection of the material composition data at an acceptable resolution for the target materials(s). The fine adjustment of the distance D3 may involve alternative methods, such as machine vision, a laser scanning system, or the measurement of the Raman scattered light intensity at different distances around the coarse position determined by the positioning system 508 and the determination of the position with the highest Raman scattered light intensity.

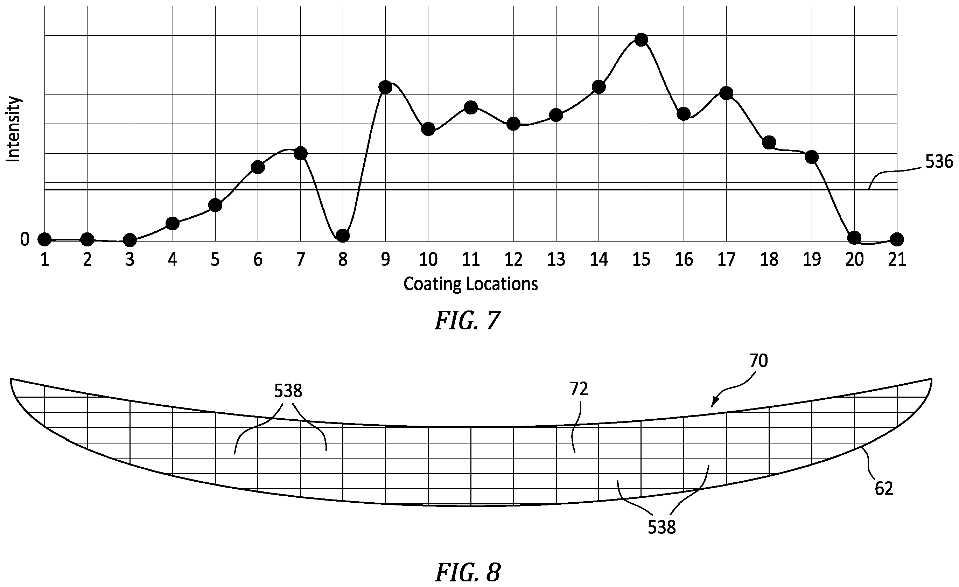

Step 406 includes identifying the coverage of the coating 74 on the tip surface 72 is satisfactory or unsatisfactory using the material composition data (e.g., the 2D or 3D material composition image) captured, for example, in step 404. Referring to FIGS. 7 and 8, the controller 512 may determine coverage of the coating 74 on the tip surface 72 using the intensity of the material composition data, which material composition data is collected for and specific to the coating 74 (e.g., the grit material 76 and/or the metallic matrix 78), as previously discussed. FIG. 7 illustrates a graph depicting a detected signal intensity based on light emission from the tip end 70 and/or the coating 74 captured by the detector 520, 528. The controller 512 may identify sufficient coverage of the coating 74 at a given location or area of the tip surface 72 where the determined intensity of the material composition data at that given location or area is greater than an intensity threshold 536. The controller 512 may identify insufficient coverage of the coating 74 at the given location or area of the tip surface 72 where the determined intensity of the material composition data at that given location or area is less than the intensity threshold 536. The controller 512 may determine the coating 74 coverage is sufficient or insufficient for the entire tip surface 72 or at least the areas of interest (see step 402). Alternatively, the controller 512 may determine the coating 74 coverage is sufficient or insufficient at a plurality of locations on the tip surface 72 to obtain a representative sample of the overall coating 74 coverage of the tip surface 72. The controller 512 may identify the coating 74 coverage of the tip surface 72 is satisfactory where controller 512 identifies sufficient coating 74 greater than a blade tip coverage threshold of the tip surface 72, for example, a threshold area percentage of the sufficient coating 74 area relative to a total area of the tip surface 72. The controller 512 may identify the coating 74 coverage of the tip surface 72 is unsatisfactory where controller 512 identifies sufficient coating 74 less than the blade tip coverage threshold.

In another embodiment, using the metallic matrix 78 as a target material and because the presence of grit material 76 may decrease a signal from the metallic matrix 78 (e.g., a nickel-based metal alloy), the controller 512 may identify sufficient coverage of the coating 74 at a given location or area of the tip surface 72 where the determined intensity from the metallic matrix 78 at that given location or area is lower than an intensity threshold 536. Conversely, the controller 512 may identify insufficient coverage of the coating 74 at the given location or area of the tip surface 72 where the determined intensity from the metallic matrix 78 at that given location or area is greater than the intensity threshold 536. Laser-induced breakdown spectroscopy, for example, may be used to detect the intensity from the nickel in the metallic matrix 78; however, the present disclosure is not limited to the use of laser-induced breakdown spectroscopy in this regard.

The controller 512 may identify the coating is sufficient or insufficient for each of a plurality of geometric areas; i.e., bins 538, of the tip surface 72. FIG. 8 illustrates an exemplary arrangement of bins 538 on the tip surface 72. The present disclosure, however, is not limited to the exemplary arrangement of the bins 538 of FIG. 8. The controller 512 may identify the coating 74 coverage in each of the bins 538 is sufficient for each of the bins 538 or insufficient for each of the bins 538. As shown in FIG. 7, for example, the controller 512 may identify the intensity (e.g., an average intensity) of the coating 74 for each of the bins 538 (e.g., coating locations 1-21 in FIG. 7) is greater than or less than the intensity threshold 536. The controller 512 may identify the coating 74 coverage of the tip surface 72 is satisfactory where a number of the bins 538 having a sufficient coating 74 is greater than the blade tip coverage threshold (e.g., a threshold quantity of the bins 538). The controller 512 may identify the coating 74 coverage of the tip surface 72 is unsatisfactory where a number of the bins 538 having a sufficient coating 74 is less than the blade tip coverage threshold.

The controller 512 may additionally or alternatively identify satisfactory or unsatisfactory coating 74 coverage of the tip surface 72 based on sufficient or insufficient coverage for a contiguous (e.g., adjacent) subset of the bins 538 or bins 538 otherwise forming a localized sub-portion of the area of the tip surface 72. For example, the controller 512 may identify unsatisfactory coating 74 coverage of the tip surface 72 based on identification of a predetermined plurality (e.g., two, three, four, etc.) of a contiguous subset of the bins 538 each having an intensity less than the intensity threshold 536.

The controller 512 may additionally or alternatively identify satisfactory or unsatisfactory coating 74 coverage of the tip surface 72 based on an identified coating 74 coverage of the tip surface 72 of one or more circumferentially-adjacent blades 62 of the bladed disk 58 (see FIG. 2). For example, the controller 512 may identify unsatisfactory coating 74 coverage of the tip surface 72 for two or more circumferentially-adjacent blades 62 where the coating 74 coverage for each of the two or more circumferentially-adjacent blades 62 is less than a coverage threshold, which coverage threshold may be different than the blade tip coverage threshold for the coating 74 of a single blade 62.

Step 408 includes repairing the coating 74 in response to an identification, by the controller 512, that the coating 74 coverage is unsatisfactory. For example, step 408 may include applying additional coating material (e.g., the grit material 76 and the metallic matrix 78) onto the existing coating 74 and the tip surface 72. Alternatively, step 408 may include removing (e.g., stripping) the existing coating 74 from the tip surface 72 and applying the coating material (e.g., the grit material 76 and the metallic matrix 78) onto the tip surface 72. Still alternatively, step 408 may include applying additional coating material (e.g., the grit material 76 and the metallic matrix 78) only onto one or more portions of the tip surface 72 identified as having insufficient coating 74 coverage. Repairing the coating 74 may be a time intensive process. In this regard, by accurately and consistently assessing a coverage of the coating 74, unnecessary repair of the coating 74 may be eliminated, thereby greatly decreasing maintenance time and expense.

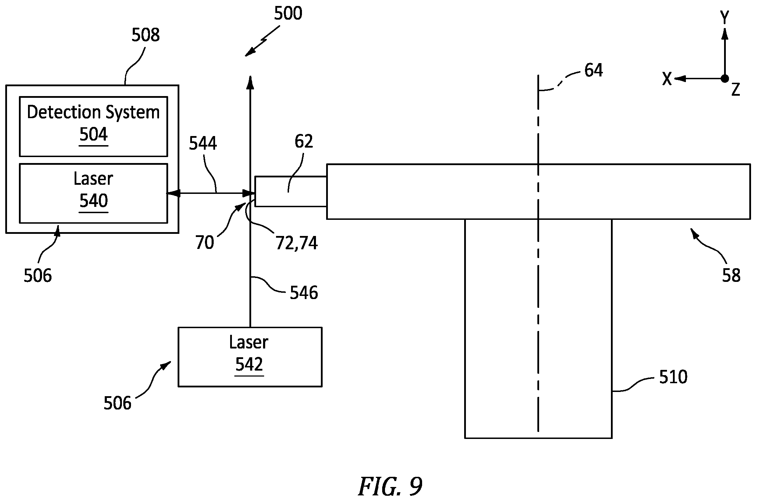

FIG. 9 schematically illustrates an exemplary embodiment of the inspection assembly 500. FIG. 9 schematically illustrates components of the inspection assembly 500 relative to the bladed disk 58 shown with one of the blades 62. FIG. 9 schematically illustrates a side view of the inspection assembly 500 and the bladed disk 58 with the axis 64 of the bladed disk 58 oriented in the Y-direction. The bladed disk 58 of FIG. 9 is mounted on the positioning system 510 with the positioning system 510 configured to rotate the bladed disk 58 about the axis 64. The positioning system 510 may be further configured to translate and/or rotate the bladed disk 58 relative to the X-direction, the Y-direction, the Z-direction, and/or one or more tilt axes. The locating system 506 of FIG. 9 includes a first locating laser assembly 540 and a second locating laser assembly 542. Each of the first locating laser assembly 540 and the second locating laser assembly 542 is configured to measure a distance (e.g., a proximity) of the first locating laser assembly 540 and the second locating laser assembly 542, respectively, from a target (e.g., the tip end 70 of the blade 62). The first locating laser assembly 540 is disposed at (e.g., on, adjacent, or proximate) the detection system 504. For example, the first locating laser assembly 540 may be mounted on the positioning system 508 at (e.g., on, adjacent, or proximate) the detection system 504. The first locating laser assembly 540 is configured to align a first laser beam 544 on the tip end 70 to accurately locate the tip end 70 in the MCS, for example, on the X-Y plane. Locating data of the tip end 70, from the first locating laser assembly 540, may be used by the controller 512 (see FIG. 5) to accurately position the detection system 504 relative to the tip surface 72 to capture the material composition data for a specified portion of the tip surface 72. The second locating laser assembly 542 is positioned separately from the first locating laser assembly 540 and the detection system 504. The second locating laser assembly 542 is configured to align a second laser beam 546 on the tip end 70, for example, in a direction orthogonal to the tip end 70 (e.g., along the Y-direction), to further locate the tip end 70 in the MCS to identify a distance (e.g., the distances D1, D2 of FIG. 6A or the distance D3 of FIG. 6B) between the detection system 504 and the tip end 70.

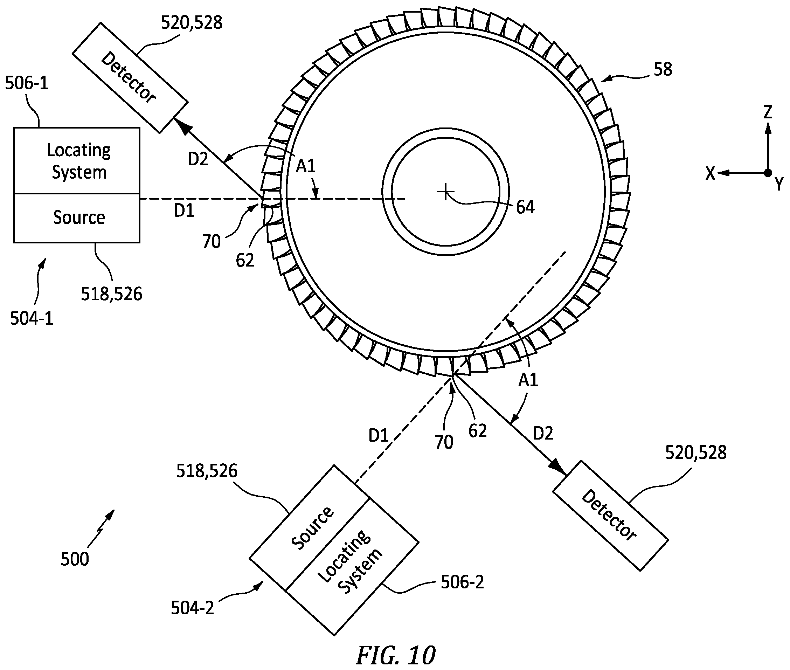

FIG. 10 schematically illustrates another exemplary embodiment of the inspection assembly 500. FIG. 10 schematically illustrates components of the inspection assembly 500 relative to the bladed disk 58 including the blades 62. FIG. 10 schematically illustrates a top view of the inspection assembly 500 and the bladed disk 58 with the axis 64 of the bladed disk 58 oriented in the Y-direction. The bladed disk 58 of FIG. 10 is mounted on the positioning system 510 (not shown in FIG. 10; see FIGS. 5 and 9) with the positioning system 510 configured to rotate the bladed disk 58 about the axis 64. The positioning system 510 may be further configured to translate and/or rotate the bladed disk 58 relative to the X-direction, the Y-direction, the Z-direction, and/or one or more tilt axes. The inspection assembly 500 includes a first detection system 504-1 (e.g., the x-ray detection system 504A) and a second detection system 504-2 (e.g., the x-ray detection system 504A). The inspection assembly 500 may include a first locating system 506-1 for the first detection system 504-1 and/or a second locating system 506-2 for the second detection system 504-2. While the inspection assembly 500 of FIG. 10 includes two detection systems 504-1, 504-2, the inspection assembly 500 may include any number of detection systems 504. The first detection system 504-1 and the second detection system 504-2 may be circumferentially offset from one another, relative to the axis 64, to facilitate scanning of the tip end 70 of multiple blades 62 simultaneous. In some embodiments, the first detection system 504-1 and the second detection system 504-2 may be configured to identify different target materials. For example, the first detection system 504-1 may be positioned with the source distance D1, the detector distance D2, and the angle A1 which is different than the source distance D1, the detector distance D2, and/or the angle A1, respectively, for the second detection system 504-2.

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected or the like may include permanent, removable, temporary, partial, full and/or any other possible attachment option.

The terms "substantially," "about," "approximately," and other similar terms of approximation used throughout this patent application are intended to encompass variations or ranges that are reasonable and customary in the relevant field. These terms should be construed as allowing for variations that do not alter the basic essence or functionality of the invention. Such variations may include, but are not limited to, variations due to manufacturing tolerances, materials used, or inherent characteristics of the elements described in the claims, and should be understood as falling within the scope of the claims unless explicitly stated otherwise.

No element, component, or method step in the present disclosure is intended to be dedicated to the public regardless of whether the element, component, or method step is explicitly recited in the claims. No claim element herein is to be construed under the provisions of 35 U.S.C. 112(f) unless the element is expressly recited using the phrase "means for." As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements.

## Claims

1. An inspection assembly (500) comprising:
a detection system (504) configured to implement a crystallographic and optical spectroscopy technique to identify a target material of a coating (74) of a component, the detection system (504) includes a source (518; 526) and a detector (520; 528), the source (518; 526) is configured to generate and direct a beam to the component, the detector (520; 528) is configured to receive a light emission of the coating (74) resulting from interaction with the beam; and
a controller (512) including a processor (514) connected in signal communication with memory (516) containing instructions which, when executed by the processor (514), cause the processor (514) to:
scan the component by controlling the source (518; 526) to direct the beam to the component and capturing material composition data for the target material from the light emission received by the detector (520; 528); and
identify a coverage of the coating (74) on the component is satisfactory or unsatisfactory based on an intensity of the material composition data, the satisfactory coverage of the coating (74) identified by the intensity greater than an intensity threshold (536), and the unsatisfactory coverage of the coating (74) identified by the intensity less than the intensity threshold (536).

2. The inspection assembly (500) of claim 1, wherein the instructions, when executed by the processor (514), further cause the processor (514) to receive an area of interest location on the coating (74), wherein scanning the component includes directing the beam to the area of interest location and capturing the material composition data for the target material at the area of interest location.

3. The inspection assembly (500) of claim 1 or 2, wherein the instructions, when executed by the processor (514), further cause the processor (514) to identify the coverage of the coating (74) on the component is satisfactory or unsatisfactory by comparing the intensity at a plurality of different points on the coating (74) to the intensity threshold (536).

4. The inspection assembly (500) of claim 1, 2 or 3, wherein the instructions, when executed by the processor (514), further cause the processor (514) to identify the coverage of the coating (74) on the component is satisfactory or unsatisfactory by identifying the coating (74) is sufficient or insufficient for each of a plurality of geometric bins (538) on the component.

5. The inspection assembly (500) of claim 4, wherein the instructions, when executed by the processor (514), further cause the processor (514) to identify the coating (74) is sufficient or insufficient for each of the plurality of geometric bins (538) by comparing the intensity for each of the plurality of geometric bins (538) to a bin intensity threshold (536).

6. The inspection assembly (500) of claim 5, wherein the instructions, when executed by the processor (514), further cause the processor (514) to identify the coverage of the coating (74) on the component is satisfactory where a quantity of the plurality of geometric bins (538) identified has having the sufficient coating (74) is greater than a threshold quantity of the geometric bins (538).

7. The inspection assembly (500) of any preceding claim, wherein the component is a first rotor blade (62) of a plurality of rotor blades of a rotor disk (60), the first rotor blade (62) having a first blade tip (70), and the coating (74) is disposed on the first blade tip (70),
wherein, optionally:
a second rotor blade (62) of the plurality of rotor blades, circumferentially adjacent the first rotor blade (62), includes a second blade tip (70), and the coating (74) is disposed on the second blade tip (70); and
the instructions, when executed by the processor (514), further cause the processor (514) to:
scan the second blade tip (70) by controlling the source (518; 526) to direct the beam to the second blade tip (70) and capturing material composition data for the target material from the light emission received by the detector (520; 528); and
identify the coverage of the coating (74) on the component is unsatisfactory based on the intensity of the material composition data for the first rotor blade (62) and the second rotor blade (62) each being less than a second intensity threshold (536), different than the intensity threshold (536).

8. The inspection assembly (500) of any preceding claim, wherein the coating (74) includes a grit material (76) dispersed in a metallic matrix (78), and the grit material (76) is the target material.

9. A method for inspecting a coating (74) of a component, the method comprising:
scanning the component, using a crystallographic and optical spectroscopy technique to identify a target material of the coating (74), by controlling a source (518; 526) of a detection system (504) to direct a beam to the component and capturing material composition data for the target material from the light emission received by a detector (520; 528) of the detection system (504); and
identifying a coverage of the coating (74) on the component is satisfactory or unsatisfactory based on an intensity calculated based on the material composition data, the satisfactory coverage of the coating (74) identified by the intensity greater than an intensity threshold (536), and the unsatisfactory coverage of the coating (74) identified by the intensity less than the intensity threshold (536).

10. The method of claim 9, wherein identifying the coverage of the coating (74) on the component is satisfactory or unsatisfactory includes identifying the coating (74) is sufficient or insufficient for each of a plurality of geometric bins (538) on the component.

11. The method of claim 9 or 10, further comprising performing a visual inspection of the component to identify one or more areas of interest for the coating (74), wherein scanning the component includes scanning the identified one or more areas of interest.

12. The method of claim 9, 10 or 11, further comprising repairing the coating (74) on the component in response to identifying the unsatisfactory coverage of the coating (74).

13. The inspection assembly (500) or method of any preceding claim, wherein the source includes an x-ray source (518).

14. The inspection assembly (500) or method of any of claims 1 to 12, wherein the source includes a Raman incident light source (526).

15. An assembly comprising:
a component including a component surface and a coating (74) disposed on the component surface, the coating (74) including a metallic matrix (78) and a grit material (76) dispersed in the metallic matrix (78);
a detection system (504) configured to implement a crystallographic and optical spectroscopy technique to identify a target material of the coating (74), the detection system (504) includes a source (518; 526) and a detector (520; 528), the source (518; 526) is configured to generate and direct a beam to the coating (74), the detector (520; 528) is configured to receive a light emission of the coating (74) resulting from interaction with the beam; and
a controller (512) including a processor (514) connected in signal communication with memory (516) containing instructions which, when executed by the processor (514), cause the processor (514) to:
scan the coating (74) by controlling the source (518; 526) to direct the beam to the coating (74) and capturing material composition data for the target material from the light emission received by the detector (520; 528); and
identify a coverage of the coating (74) on the component is satisfactory or unsatisfactory based on an intensity of the material composition data by comparing the intensity to an intensity threshold (536) for the target material,
wherein, optionally:
the target material is the grit material (76), the coverage of the coating (74) on the component is satisfactory where the intensity is greater than the intensity threshold (536), and the coverage of the coating (74) on the component is unsatisfactory where the intensity is less than the intensity threshold (536); and/or
the target material is the metallic matrix (78), the coverage of the coating (74) on the component is satisfactory where the intensity is less than the intensity threshold (536), and the coverage of the coating (74) on the component is unsatisfactory where the intensity is greater than the intensity threshold (536).
